# EUROPEAN PATENT APPLICATION

(11) **EP 4 257 592 A1**
(43) Date of publication of application: **11.10.2023**
(21) Application number: 22167263.7
(22) Date of filing: 08.04.2022
(51) Int. Cl.: C07F 7/30, C08F 2/50, C08F 4/72

(54) **BISACYL DIGERMANIUM COMPOUNDS, THEIR PREPARATION AND THEIR USE AS PHOTOINITIATOR FOR RADICAL POLYMERIZATION**

(71) Applicant: Evonik Operations GmbH, 45128 Essen (DE)
(72) Inventor: HAAS, Michael, 8051 Graz (AT); WIESNER, Tanja, 8010 Graz (AT)
(74) Representative: Evonik Patent Association

(57) **Abstract**

The present invention discloses bisacyl digermanium compounds according to the general formula R¹R²R³-Ge-Ge-R⁴R⁵R⁶, wherein each R¹ and R⁴ is an acyl group, and the use of such compounds as initiators for radical polymerization.

## Description

### FIELD OF THE INVENTION

The present invention relates to bisacyl digermanium compounds, their preparation, and their use as photoinitiator for radical polymerization.

Compositions polymerizable by radical polymerization are particularly suitable for the preparation of adhesives, coatings, cements, composites, shaped parts such as rods, plates, disks or lenses etc. and in particular dental materials.

### BACKGROUND

Photoinitiators play a decisive role for the curing of photopolyreactive resins. Upon irradiation with UV or visible light it absorbs light and forms the polymerization-initiating species. In the event of radical polymerization these are free radicals. The photoinitiators are divided into two classes based on the chemical mechanism of radical formation.

Norrish type I photoinitiators form free radicals upon irradiation by unimolecular bond cleavage. Upon irradiation, Norrish type II photoinitiators undergo a bimolecular reaction wherein the photoinitiator in the excited state reacts with a second molecule, the coinitiator, and the polymerization-initiating radicals form by electron and proton transfer. Type I and type II photoinitiators are used for UV light curing; to date apart from bisacyldialkyl germanium compounds type II photoinitiators are almost exclusively used for the visible light range.

UV curing is characterized by a high reaction rate and is frequently used for the coatings of different substrates such as e.g. wood, metal or glass. Thus, for example in EP 1 247 843 A2 a UV-curing coating material is described, in which type I photoinitiators such as diethoxyphenylacetophenone or acyl- or bisacylphosphine oxide are used.

WO 01/51533 A1 describes a UV-curing wood-coating material in which acylphosphine oxides, a-hydroxyalkylphenones or α-dialkoxyacetophenones are also used as photoinitiators. Above all, transparent coatings with low layer thickness can be produced with UV curing due to the low wavelength of the UV light. The limits of UV curing are reached with pronounced shading or pigmentation and greater layer thicknesses. Such photopolyreactive resins with clearly reduced transparency cure only incompletely with UV light.

If greater through-curing depths are required, such as for example in the curing of light-curing dental filling materials, visible light is used for irradiation. The photoinitiator system most frequently used for this is a combination of an α-diketone with an amine coinitiator as described e.g. in GB 1 408 265.

Dental compositions in which this photoinitiator system is used are disclosed e.g. in U.S. Pat. Nos. 4,457,818 or 4,525,256, wherein preferably camphorquinone is used as α-diketone. Camphorquinone has an absorption maximum at a wavelength of 468 nm. As a result, camphorquinone displays a strong yellow colouring with the disadvantage that materials initiated with camphorquinone/amine often have a yellow cast after curing, as the initiator system is not completely bleached. (N. Moszner, R. Liska, Photoinitiators for direct adhesive restorative materials, In: Basics and Applications of Photopolymerization Reactions, Vol. 1; Fouassier, J.-P., Allonas, X., Eds., Research Signpost, Kerala, 2010, 93-114). This bleaching behaviour is very disadvantageous in particular in the case of bright white shades of the fully polymerized material. In addition, when used in acid adhesives, camphorquinone amine systems have the disadvantage that the radical-forming amine component protonates and is thereby partially deactivated for radical formation.

The use of germanium compounds as photoinitiators is known. Bisacyldialkyl germanium compounds are above all efficient Norrish Type I photoinitiators for curing in the blue light range (B. Ganster, U. K. Fischer, N. Moszner, R. Liska, New photocleavable structures, Diacylgerman-based photoinitiators for visible light curing, Macromolecules 41 (2008) 2394-2400; N. Moszner, U.K. Fischer, B. Ganster, R. Liska, V. Rheinberger, Benzoyl germanium derivatives as novel visible light photoinitiators for dental materials Dent. Mater. 24 (2008) 901-907; N. Moszner, F. Zeuner, I. Lamparth, U. K. Fischer, Benzoylgermanium derivatives as novel visible-light photoinitiators for dental composites, Macromol. Mater. Eng. 294 (2009) 877-886).

EP 1 905 413 A1 and EP 1 905 415 A1 disclose mono-, bis- and triacyl germanium compounds which are suitable as photoinitiators for curing dental materials with visible light. Their synthesis is costly and is carried out starting from expensive dialkyl germanium dihalides using the dithiane protective-group technique and purification using column chromatography.

From EP 2 103 297 A1 suitable acyl germanium compounds which contain several germanium atoms are known as photoinitiators.

WO 2015/067815 A1 discloses bis(germyl)ketones with the formula R¹R²R³Ge(CO)GeR⁴R⁵R⁶ and processes for the preparation thereof. These bis(germyl)ketones are also intended to be suitable as photoinitiators for dental materials.

WO 2017/055209 A1 and EP 3 150 641 A1 discloses acyl germanium compounds of the general formula [RₘAr(C=O)]₄Ge and to a method for the production thereof. The compounds are suitable as initiator for radical polymerizations.

The object of the present invention is to provide further photoinitiators for the visible range, which are characterized by specific reactivity and curing characteristics and which can be activated in particular by visible light in the long-wave range. A further object of the invention is to provide a method for straight preparation of the new photoinitiators.

### SUMMARY

In a first aspect, the present invention is directed to a bisacyl digermanium compound according to the general formula (I), [R¹R²₂-Ge]₂, wherein R¹ is an acyl group -(C=O)R³, wherein R² is an alkyl group, wherein R³ is an alkyl group, an aryl group, or a heteroarylgroup.

In a second aspect, the present invention is directed to the use of such compound as initiator for radical polymerization.

In a third aspect, the present invention is directed to method for preparation of a bisacyl digermanium compound according to the general formula (I), [R¹R²₂-Ge]₂, in which a dihalogeno tetraalkyl digermane of formula (II), [XR²₂-Ge]₂, is reacted with a dithiane compound (III), R³C[-S(CH₂)₃S-]M to form (IV), ([-S(CH₂)₃S-]R³C)R²₂-Ge]₂, followed by dethioketalization to form compound (I), wherein R¹ is an acyl group -(C=O)R³, wherein R² is an alkyl group, wherein R³ is an alkyl group, an aryl group, or a heteroarylgroup, wherein X is F, Cl, Br or I, and wherein M is Li, or MgBr.

### FIGURES

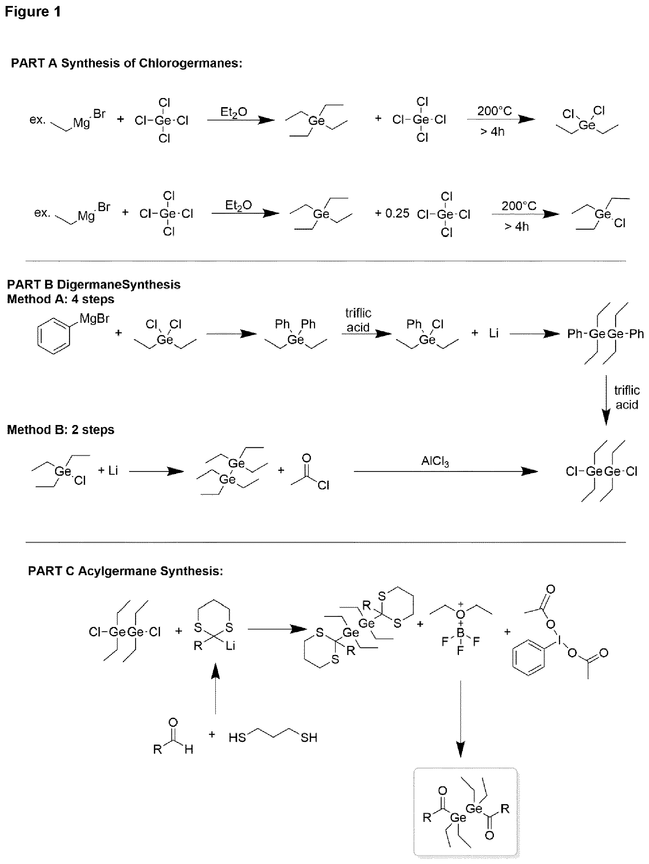

**Figure 1** illustrates general synthetic pathways towards bisacyldigermanes.

### DETAILED DESCRIPTION

The above-mentioned object is achieved by bisacyl digermanium compounds according to the general formula (I),

[**R⁰**-][**R⁰**-][**Ar**(C=O)-]Ge-Ge[-(C=O)**Ar**][-**R⁰**][-**R⁰**] (I),

wherein each **R⁰** is independently H, an alkyl group, an alkoxy group, an aryl, or an aroyl group, wherein **Ar** is a substituted or unsubstituted, monocyclic or polycyclic alkyl, aryl, or a heteroaryl group with 6 to 18 ring atoms.

If the group **Ar** is substituted it can be substituted **m** times by one or more groups **R**:

[R⁰-][R⁰-][**Rₘ**Ar(C=O)-]Ge-Ge[-(C=O)Ar**Rₘ**][-R⁰][-R⁰] (Ia),

wherein **m** is an integer from 1 to 6 and cannot be greater than the number of substitutable hydrogen atoms in **Ar**,
wherein the one or more groups **R** are independently selected from the list consisting of a halogen, OH, CN, NO₂, CF₃, an N**R¹**₂ group, an OSi**R²**₃ group, a (C=O)**R³** group, a COO**R⁴** group, a C₁ to C₂₀ alkyl group, a C₁ to C₂₀ alkenyl group, a C₁ to C₂₀ alkoxy group and a C₁ to C₂₀ alkenoxy group, wherein **R¹**, **R²**, and **R³** are independently selected from H and a linear or branched C₁ to C₁₂ alkyl group, and
wherein **R⁴** is selected from H, a linear or branched C₁ to C₁₂ alkyl radical, and Si**R⁵**₃, wherein **R⁵** is a linear or branched C₁ to C₁₀ alkyl group.

According to the invention one or more of the 6 to 18 ring atoms of the group **Ar** can be heteroatoms. The heteroatoms are preferably selected from N, O, and S. In case of more than one heteroatom all heteroatoms can be the same or can be combinations of different heteroatoms. If the group **Ar** contains heteroatoms, one or two heteroatoms in the ring(s) are preferred. In this case, particularly preferred groups **Ar** are pyridine, pyrimidine and quinoline.

If **R** is a C₁ to C₂₀ alkyl, -alkenyl, -alkoxy or -alkenoxy group, all of these can be independently linear, branched or cyclic. In addition, or alternatively, all of these C₁ to C₂₀ alkyl, -alkenyl, -alkoxy or -alkenoxy groups can be independently interrupted by one or more O atoms. Also, independently from the aforementioned alternatives all of these groups can independently bear a radically polymerizable group or a carbonyl group.

Preferred radically polymerizable groups which can be independently present as substituents in the **R** groups, are vinyl, styryl, acrylate (CH₂=CH-COO-), methacrylate (CH₂=C(CH₃)-COO-), acrylamide (CH₂=CH-CO-N**R⁶**-, with **R⁶**=H or C₁ to C₈ alkyl), or methacrylamide (CH₂=C(CH₃)-CO-NH-). Particularly preferred are (meth)acrylates, methacrylamides and N-alkylacrylamides. The **R** group(s) preferably bear 0 to 3, in particular 0 to 1 radically polymerizable groups. In non-cyclic groups the polymerizable groups are preferably arranged terminal.

If several **R** groups are present (**m** >1), these can be different or preferably identical.

**Ar** is preferably a mono- or polycyclic hydrocarbon group which contains at least one aromatic ring, particularly preferably an aromatic hydrocarbon group. Preferred hydrocarbon groups with at least one aromatic ring are anthraquinone and naphthoquinone. In addition to the benzene group, condensed aromatic groups such as naphthalene, anthracene, phenanthrene and naphthacene groups are preferred as aromatic hydrocarbon groups.

All stereoisomeric forms and mixtures of various stereoisomeric forms such as e.g. racemates are covered by formula (I) and the other formulae shown herein. The formulae cover only those compounds that are compatible with the chemical valence theory. For example, **m** cannot be greater than the number of substitutable hydrogen atoms in the **Ar** group. If **R** is bonded to **Ar** via two bonds, the maximum number of possible **R** groups is correspondingly smaller.

The indication that a group can be interrupted by a heteroatom such as O is to be understood to mean that the O atoms are inserted into the carbon chain or the carbon ring of the group, i.e. are bordered on both sides by carbon atoms. The number of heteroatoms is therefore at least 1 fewer than the number of carbon atoms, and the heteroatoms cannot be terminal. In the case of hydrocarbon groups which contain carbon atoms and heteroatoms, the number of heteroatoms is always less than the number of carbon atoms, without taking substituents into account.

Halogen (abbreviated to Hal) preferably stands for F, Cl, Br or I, in particular F, Cl, quite particularly preferably Cl.

Bisacyl digermanium compound corresponding to general formula (I) are particularly preferred, wherein each **R⁰** is H or an alkyl group,
wherein **Ar** is an aromatic C₆ to C₁₀ group,
wherein **Ar** is substituted **m** times by one or more groups **R**, wherein **m** is an integer from 1 to 3, wherein the one or more groups **R** are independently selected from the list consisting of CI, OH, CN, NO₂, CF3, an N**R¹**₂ group, an OSi**R²**₃ group, a (C=O)**R³** group, a COO**R⁴** group, a C₁ to C₁₀ alkyl group, a C₁ to C₁₀ alkenyl group, a C₁ to C₁₀ alkoxy group and a C₁ to C₂₀ alkenoxy group, wherein **R¹**, **R²**, and **R³** are independently selected from H and a linear or branched C₁ to C₈ alkyl group, and
wherein **R⁴** is selected from H, a linear or branched C₁ to C₈ alkyl radical, and Si**R⁵**₃, wherein **R⁵** is a linear or branched C₁ to C₈ alkyl group.

Bisacyl digermanium compound corresponding to general formula (I) are further preferred, wherein each **R⁰** is H or an alkyl group,
wherein **Ar** is a phenyl group, a pyridyl group, a naphthyl group, an anthryl group, or an anthraquinonyl group,
wherein **Ar** is substituted **m** times by one or more groups **R**, wherein **m** is an integer from 1 to 3, wherein the one or more groups **R** are independently selected from CN, NO₂, CF₃, an N**R¹**₂ group, a C₁ to C₃ alkyl group, and a C₁ to C₃ alkoxy group, in case of a C₁ to C₃ alkyl group and/or a C₁ to C₃ alkoxy group, these groups are preferably linear and/or, optionally, bear a terminal radically polymerizable group, preferably a vinyl group, an acrylate group, or a methacrylate group, wherein **R¹** is independently selected from H and a linear C₁ to C₃ alkyl group.

If **Ar** is a phenyl group and **m** =1, the **R** group is preferably located in the para-position relative to the yl position, if **m** =2 or 3, the **R** groups are preferably located in the ortho- and para-position relative to the -yl position. The preferred and particularly preferred meanings of the individual variables can be chosen independently of each other in each case.

Quite particularly preferred are compounds of formula (I), in which **Ar** is a phenyl group, which is substituted by **R m** times. **m** is preferably 1 to 3, particularly preferably **1**, and **R** is preferably an electron donor group, in particular an alkoxy group.

According to the invention compounds of formula (I) are preferred which have an absorption maximum at 350 nm to 700 nm, preferably 390 nm to 550 nm, particularly preferred 400 nm to 430 nm. The absorption spectrum of the compounds of formula (I) can be adjusted in a targeted manner by the selection of the **R** group.

If in the bisacyl digermanium compounds according to the invention the group **R⁰** is an alkyl group, an alkoxy group, an aryl, or an aroyl group, it is preferred that it is a C₁ to C₂₀ alkyl, a C₁ to C₂₀ alkenyl, C₁ to C₂₀ alkoxy or C₁ to C₂₀ alkenoxy group, all of these can be independently linear, branched or cyclic. In the bisacyl digermanium compounds according to the invention it is preferred that the group **R⁰** is a C₁ to C₁₂ alkyl group, more preferably a C₁ to C₆ alkyl group, and particularly preferred selected from the list consisting of CH₃, C₂H₅, C₃H₇, and C₄H₉. Most preferred is that the group **R⁰** is C₂H₅.

Specific examples of the bisacyl digermanium compounds according to the invention are: 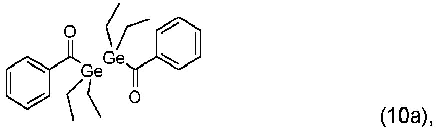 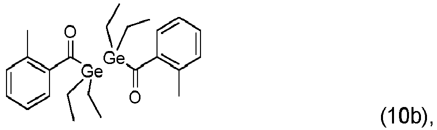 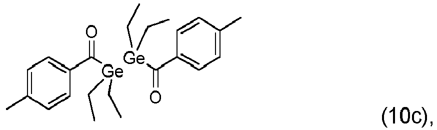 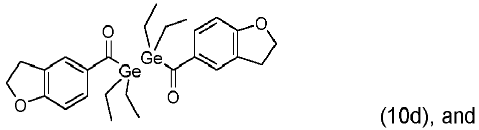 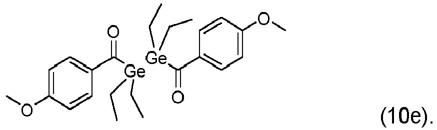 Bisacyl digermanium compounds of general formula (I) are not known from the state of the art and cannot be prepared with conventional processes.

These compounds are characterized by a high reactivity, i.e. an excellent polymerization-initiating effect and a good through-curing depth upon irradiation with visible light. This is of great advantage in the case of medical applications, for example for dental materials, like dental filling composites, but also for non-dental uses, like for the production of contact lenses.

It was surprisingly found that bisacyl digermanium compounds of formula (I) can be prepared by reacting a dihalogeno tetraalkyl digermane of formula (II) with a dithiane compound (III) to form (IV) followed by dethioketalization to form (I),

[**R⁰**₂**X**Ge-]₂ + **Ar**C(-S(CH₂)₃S-)**M** (II) (III)

→ [**R⁰**₂[**Ar**C(-S(CH₂)₃S-)]Ge-]₂ (IV)

→ [**R⁰**₂[**Ar**-(C=O)-]Ge-]₂ (I)

wherein each **R⁰** is independently H, an alkyl group, an alkoxy group, an aryl, or an aroyl group, wherein **Ar** is a substituted or unsubstituted, monocyclic or polycyclic alkyl, aryl, or a heteroaryl group with 6 to 18 ring atoms,
wherein **X** is F, Cl, Br or I, and
wherein **M** is Li, or MgBr.

With respect to the variables **Ar**, **R⁰**, **X**, and **M** in the above mentioned method, the same definitions and preferred specifications apply as defined for the variables and corresponding subvariables of the bisacyl digermanium compounds of formula (I).

The bisacyl digermanium compounds of formula (I) are particularly suitable as photoinitiators for polymerization, in particular as initiators for radical polymerization, photoaddition and for thiol-ene reaction (polyaddition). It has been found that with these initiators, upon irradiation with light (i.e. visible light, which is highly beneficial for medical applications), a high through-curing depth can be achieved. This is a great advantage in many technical and particularly medical materials.

The bisacyl digermanium compounds of formula (I) are particularly suitable for the preparation of dental materials, bone cements and quite particularly of contact lenses, intraocular lenses or other medical shaped parts, such as e.g. ear shells, cartilage implants and artificial tissue parts.

The great through-curing depth upon curing with light in the visible wavelength range is also a substantial advantage in technical applications. The initiators of formula (I) are therefore also suitable for a plurality of non-medical uses, such as for example for the preparation of printing inks or paints, varnishes, adhesives, for the preparation of printing plates, integrated circuits, photoresists, soldering masks, inks for colour printers, as materials for holographic data storage, for the preparation of nanosized microelectromechanical elements, optical waveguides, shaped parts and for the optical preparation of information carriers. A main field of application is the use as photoinitiator in the stereolithographic preparation of technical shaped parts, e.g. of precision shaped parts and ceramic green bodies.

The compositions according to the invention preferably contain, relative to the total mass of the composition, 0.001 to 5 wt.-%, particularly preferably 0.01 to 1.0 wt.-% of the bisacyl digermanium compounds of formula (I). In addition to the bisacyl digermanium compounds of formula (I) the compositions preferably also contain a polymerizable binder. Preferred binders are radically and/or cationically polymerizable monomers and/or prepolymers, particularly preferably radically polymerizable monomers, radically polymerizable prepolymers or a mixture thereof.

Mono- or multifunctional (meth)acrylates or mixtures thereof are particularly suitable as radically polymerizable binders. By mono-functional (meth)acrylic compounds is meant compounds with one, by polyfunctional (meth)acrylates compounds with two or more, preferably 2 to 3, polymerizable groups.

Examples in this respect are methyl, ethyl, hydroxyethyl, butyl, benzyl, tetrahydrofurfuryl or isobornyl (meth)acrylate, bisphenol A di(meth)acrylate, bis-GMA (an addition product of methacrylic acid and bisphenol A diglycidyl ether), UDMA (an addition product of 2-hydroxyethyl methacrylate and 2,2,4-trimethyl hexamethylene diisocyanate), di-, tri- or tetraethylene glycol di(meth)acrylate, trimethylolpropane tri(meth)acrylate, pentaerythritol tetra(meth)acrylate, as well as glycerol di- and tri(meth)acrylate, 1,4-butanediol di(meth)acrylate, 1,10-decanediol di(meth)acrylate or 1,12-dodecanediol di(meth)acrylate. Compositions which contain at least one radically polymerizable monomer with 2 or more, preferably 2 to 3 radically polymerizable groups, are particularly preferred. Polyfunctional monomers have cross-linking properties.

Hydrolytically stable diluting monomers such as hydrolytically stable mono(meth)acrylates can also be used as radically polymerizable binders, e.g. mesitylmethacrylate or 2(alkoxy-methyl)acrylic acids, e.g. 2-(ethoxymethyl)acrylic acid, 2-(hydroxymethyl)acrylic acid, N-mono- or -disubstituted acryl amides, such as e.g. N-ethylacrylamide, N,N-dimethacrylamide, N-(2-hydroxyethyl)acrylamide or N-Methyl-N-(2-hydroxyethyl)acrylamide, or N-monosubstituted methacrylamides, such as e.g. N-ethyl-methacrylamide or N-(2-hydroxyethyl)methacrylamide and also N-vinylpyrrolidone or allyl ether. Preferred examples of hydrolytically stable cross-linking monomers are urethanes of 2-(hydroxymethyl)acrylic acid and diisocyanates, such as 2,2,4-trimethylhexamethylene diisocyanate or isophorone diisocyanate; cross-linking pyrrolidones, such as e.g. 1,6-bis(3-vinyl-2-pyrrolidonyl) hexane, or commercially accessible bisacrylamides such as methylene or ethylene bisacrylamide, or bis-(meth)acrylamides, such as e.g. N,N'-diethyl-1,3-bis(acrylamido) propane, 1,3-bis(methacrylamido) propane, 1,4-bis(acrylamido) butane or 1,4-bis(acryloyl) piperazine which can be synthesized by reaction from the corresponding diamines with (meth)acrylic acid chloride.

Known low-shrinkage radically ring-opening polymerizable monomers such as e.g. mono- or multifunctional vinyl cyclopropanes or bicylic cyclopropane derivatives (cf. DE 196 16 183 C2 or EP 1 413 569 A1) or cyclic allyl sulphides (cf. U.S. Pat. Nos. 6,043,361 or 6,344,556) can also be used as radically polymerizable binders. These monomers can also be used in combination with the di(meth)acrylate cross-linkers listed above. Suitable ring-opening polymerizable monomers are vinyl cyclopropanes, such as 1,1-di(ethoxycarbonyl)- or 1,1-di(methoxycarbonyl)-2-vinyl cyclopropane or the esters of 1-ethoxycarbonyl- or 1-methoxycarbonyl-2-vinyl cyclopropane carboxylic acid with ethylene glycol, 1,1,1-trimethylolpropane, 1,4-cyclohexanediol or resorcinol. Suitable bicyclic cyclopropane derivatives are 2-(bicyclo[3.1.0]hex-1-yl)acrylic acid methyl or ethyl esters or their derivatives which are disubstituted in 3-position, such as (3,3-bis(ethoxycarbonyl)bicyclo[3.1.0]hex-1-yl)acrylic acid methyl or ethyl ester. Suitable cyclic allyl sulphides are the addition products of 2-(hydroxymethyl)-6-methylene-1,4-dithiepane or 7-hydroxy-3-methylene-1,5-dithiacyclooctane with 2,2,4-trimethyl hexamethylene-1,6-diisocyanate or an asymmetrical hexamethylene diisocyanate trimer (e.g. Desmodur^{®} VP LS 2294 from Bayer AG).

Formulations based on vinyl esters, vinyl carbonates and vinyl carbamates are also preferred as radically polymerizable monomers. In addition, styrene, styrene derivatives or divinyl benzene, unsaturated polyester resins and allyl compounds or radically polymerizable polysiloxanes which can be prepared from suitable methacrylic silanes such as e.g. 3-(methacryloyloxy)propyltrimethoxysilane, and which are described e.g. in DE 199 03 177 C2 can be used as monomers.

Furthermore, mixtures of the previously named monomers with radically polymerizable, acid-group-containing monomers which are also called adhesive monomers can also be used as radically polymerizable binders. Preferred acid-group-containing monomers are polymerizable carboxylic acids, such as maleic acid, acrylic acid, methacrylic acid, 2-(hydroxylmethyl)acrylic acid, 4-(meth) acryloyloxyethyltrimellitic acid anhydride, 10-methacryloyloxydecylmalonic acid, N-(2-hydroxy-3-methacryloyloxypropyl)-N-phenylglycine or 4-vinylbenzoic acid.

Radically polymerizable phosphonic acid monomers, in particular vinylphosphonic acid, 4-vinylphenylphosphonic acid, 4-vinylbenzylphosphonic acid, 2-methacryloyloxyethylphosphonic acid, 2-methacrylamidoethylphosphonic acid, 4-methacryl-amido-4-methyl-pentyl-phosphonic acid, 2-[4-(dihydroxylphosphoryl)-2-oxa-butyl]-acrylic acid or 2-[2-dihydroxyphosphoryl)-ethoxymethyl]-acrylic acid ethyl or 2,4,6-trimethylphenyl ester are also suitable as adhesive monomers.

Furthermore, acidic polymerizable phosphoric acid esters, in particular 2-methacryloyloxypropyl mono- or dihydrogen phosphate, 2-methacryloyloxyethyl mono- or dihydrogen phosphate, 2-methacryloyloxyethylphenyl hydrogen phosphate, dipentaerythritol-pentamethacryloyloxyphosphate, 10-methacryloyloxydecyl-dihydrogen phosphate, dipentaerythritol-pentamethacryloyloxyphosphate, phosphoric acid mono-(1-acryloyl-piperidine-4-yl)-ester, 6-(methacrylamido)hexyl dihydrogen phosphate and 1,3-bis-(N-acryloyl-N-propyl-amino)-propane-2-yl-dihydrogen phosphate are suitable as adhesive monomers.

In addition, polymerizable sulphonic acids are suitable as adhesive monomers, in particular vinyl sulphonic acid, 4-vinylphenyl sulphonic acid or 3-(methacrylamido)propyl sulphonic acid.

Thiol-ene resins which contain mixtures of mono- or multifunctional mercapto compounds and di- or multifunctional unsaturated monomers, above all allyl or norbornene compounds are particularly suitable as binders curable by polyaddition.

Examples of mono- or multifunctional mercapto compounds are o, m, or p-dimercaptobenzene and esters of thioglycol or of 3-mercaptopropionic acid with ethylene, propylene or butylene glycol, hexanediol, glycerol, trimethylolpropane or pentaerythritol.

Examples of di- or multifunctional allyl compounds are esters of allyl alcohol with di- or tricarboxylic acids, such as malonic, maleic, glutaric, succinic, adipic, sebacic, phthalic, terephthalic or gallic acid and mono- or trifunctional allyl ethers, such as e.g. diallyl ether, α,ω-bis[allyloxy]alkane, resorcin or hydroquinone diallyl ether and pyrogallol triallyl ether, or other compounds such as e.g. 1,3,5-triallyl-1,3,5-triazine-2,4,6-(1H,3H,5H)-trione, tetraallyl-silane or tetraallylorthosilicate.

Examples of di- or multifunctional norbornene compounds are Diels-Alder addition products of cyclopentadiene or furan with di- or multifunctional (meth)acrylates, as well as esters and urethanes of 5-norbornene-2-methanol or 5-norbornene-2-ol with di- or polycarboxylic acids such as e.g. malonic, maleic, glutaric, succinic, adipic, sebacic, phthalic, terephthalic or gallic acid, with, respectively, di- or polyisocyanates, such as hexamethylene diisocyanate or its cyclic trimer, 2,2,4-trimethylhexamethylene diisocyanate, toluylene diisocyanate or isophorone diisocyanate.

In addition to the bisacyl digermanium compounds of general formula (I) the compositions according to the invention may advantageously also contain known photoinitiators (cf. J. P. Fouassier, J. F. Rabek (eds.), Radiation Curing in Polymer Science and Technology, Vol. II, Elsevier Applied Science, London and New York 1993) for the UV or visible range, such as e.g.: benzoin ethers, dialkyl benzil ketals, dialkoxyacetophenones, acyl or bisacyl phosphine oxides, α-diketones such as 9,10-phenanthrenequinone, diacetyl, furil, anisil, 4,4'-dichlorobenzil and 4,4'-dialkoxybenzil and camphorquinone.

For dual curing the compositions according to the invention can also contain, in addition to the bisacyl digermanium compounds of general formula (I), azo compounds such as 2,2'-azobis(isobutyronitrile) (AIBN) or azobis-(4-cyano valeric acid), or peroxides, such as dibenzoyl peroxide, dilauroyl peroxide, tert-butylperoctoate, tert-butylperbenzoate or di-(tert-butyl)-peroxide.

To accelerate initiation by means of peroxides, combinations with aromatic amines can also be used. Redox systems which have already proved worthwhile are: combinations of benzoylperoxide with amines such as N,N-dimethyl-p-toluidine, N,N-dihydroxyethyl-p-toluidine, p-dimethylaminobenzoic acid ethyl ester or structurally related systems. In addition, redox systems consisting of peroxides and reducing agents such as e.g. ascorbic acid, barbiturates or sulphinic acids or combinations of hydroperoxides with reducing agents and catalytic metal ions, such as e.g. a mixture of cumene hydroperoxide, thiourea derivative and copper(II)-acetyl acetonate, are also suitable for dual curing.

According to the invention, compositions are preferred which contain one or more fillers, preferably organic or inorganic particulate fillers. Preferred inorganic particulate fillers are amorphous spherical nanoparticulate fillers based on oxides such as pyrogenic silicic acid or precipitated silicic acid, ZrO2 and TiO2 or mixed oxides of SiO2, ZrO2 and/or TiO2 with an average particle diameter of from 10 to 200 nm, mini fillers such as quartz, glass ceramic or glass powder with an average particle size of from 0.2 to 5 µm and x-ray opaque fillers such as ytterbium trifluoride or nanoparticulate tantalum(V) oxide or barium sulphate. In addition, fibrous fillers such as nanofibres, glass fibres, polyamide or carbon fibres can also be used.

For non-dental uses, in addition to the above-named materials, homo- and/or copolymers, preferably poly((meth)acrylate)s, vinyl polymers, preferably polystyrene or polyvinyl acetate, or condensation polymers, preferably polyester, are suitable as fillers. These fillers are preferably used as powder with an average particle size between 0.5 and 100 µm. They are partially soluble in the monomer.

Additionally, the compositions according to the invention can, if necessary, contain further additives such as e.g. stabilizers, UV absorbers, dyes or pigments and solvents, such as e.g. water, ethanol, acetone and/or ethyl acetate or slip additives.

The materials according to the invention preferably contain:
(a) 0.001 to 5 wt.-% bisacyl digermanium compounds of general formula (I),
(b) 10 to 99.9 wt.-% radically polymerizable binder,
(c) 0 to 85 wt.-% filler and optionally
(d) 0 to 70 wt.-% additive(s).

Materials which are particularly suitable as dental cements preferably contain:
(a) 0.001 to 5 wt.-% bisacyl digermanium compounds of general formula (I),
(b) 10 to 50 wt.-% radically polymerizable binder,
(c) 40 to 70 wt.-% filler and
(d) 0 to 5 wt.-% additive.

Materials which are particularly suitable as dental composites preferably contain:
(a) 0.001 to 5 wt.-% bisacyl digermanium compounds of general formula (I),
(b) 10 to 40 wt.-% radically polymerizable binder,
(c) 50 to 70 wt.-% filler and
(d) 0 to 5 wt.-% additive(s).

Materials which are particularly suitable as dental coating materials preferably contain:
(a) 0.001 to 5 wt.-% bisacyl digermanium compounds of general formula (I),
(b) 20 to 99.9 wt.-% radically polymerizable binder,
(c) 0 to 20 wt.-% nanoparticulate fillers and
(d) 0.01 to 2 wt.-% additive(s),
(e) 0 to 70 wt.-% solvent.

Materials which are particularly suitable as dental adhesives preferably contain:
(a) 0.001 to 5 wt.-% bisacyl digermanium compounds of general formula (I),
(b) 20 to 98.99 wt.-% radically polymerizable binder,
(c) 0 to 20 wt.-% nanoparticulate fillers
(d) 0.01 to 2 wt.-% additive,
(e) 0 to 50 wt.-% solvent and
(f) 1 to 20 wt.-% radically polymerizable adhesive monomers.

Materials for dental prostheses or surgical moulded bodies preferably contain:
(a) 0.001 to 5 wt.-% bisacyl digermanium compounds of general formula (I),
(b) 30 to 99.9 wt.-% radically polymerizable binder,
(c) 0 to 60 wt.-% filler(s) and optionally
(d) 0 to 3 wt.-% additive(s).

Materials for plastic shaped parts preferably contain:
(a) 0.001 to 5 wt.-% bisacyl digermanium compounds of general formula (I),
(b) 30 to 99.9 wt.-% radically polymerizable binder,
(c) 0 to 60 wt.-% filler and optionally
(d) 0 to 15 wt.-% additive(s).

Materials for ceramic green bodies preferably contain:
(a) 0.001 to 5 wt.-% bisacyl digermanium compounds of general formula (I),
(b) 0 to 40 wt.-% radically polymerizable binder,
(c) 40 to 90 wt.-% filler and optionally
(d) 0 to 20 wt.-% additive(s).

Unless otherwise indicated, all percentages relate to the total mass of the material.

The materials according to the invention which contain bisacyl digermanium compounds of general formula (I) as photoinitiator, can be used for the preparation of photopolymerizates, composites, cements, coating materials, primers or adhesives. They are particularly suitable for uses in the medical field, above all for the preparation of dental materials, such as filling composites, fixing cements, adhesives, prosthesis materials, veneering materials, crowns or inlays or coatings.

The dental materials are suitable primarily for intraoral application by the dentist to restore damaged teeth, i.e. for therapeutic application, e.g. as dental cements, filling composites and veneering materials. However, they can also be used extraorally, for example in the manufacture or repair of dental restorations, such as prostheses, artificial teeth, inlays, onlays, crowns and bridges.

Furthermore, the materials according to the invention are suitable for medical use in surgery, e.g. in tissue regeneration, for the preparation of hearing aids or in ophthalmology for the preparation of intraocular lenses or contact lenses.

In technical applications the bisacyl digermanium compounds of general formula (I) can be used as photoinitiator in stereolithography or in 3D printing for the preparation of moulded bodies, prototypes or green bodies, in the field of coatings or in microelectronics e.g. in photoresist technology.

The invention is described in further detail in the following with reference to examples.

### EXAMPLES

All experiments with air- or moisture-sensitive compounds were carried out under nitrogen atmosphere using standard Schlenk techniques. Anhydrous and oxygen-free solvents were obtained using a solvent drying system from Innovative Technology. All chemicals from commercial sources were used as purchased from chemical suppliers.

### PART A: Syntheses of Educts - Chloroorganogermanes

### 1^{st} Step: Synthesis of Tetraethylgermane

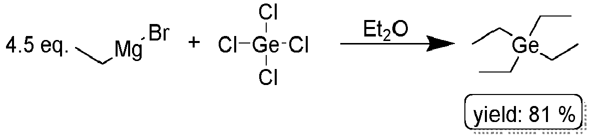

55.94 g of Grignard solution (419.72 mmol) were added to a solution of 20 g tetrachlorogermane (93.27 mmol) in diethyl ether at 0 °C. After the addition was completed, the reaction mixture was heated to reflux for 2h and further stirred at room temperature overnight. An aqueous work-up with a NH₄Cl solution followed. The organic layer was separated; the aqueous layer was extracted three times with diethyl ether. The combined organic phases were dried over Na₂SO₄, filtered and the volatile components were removed under vacuum. The product was obtained as a colorless oil. Yield: 14.3 g (81 %)

### 2^{nd} Step: Kocheshkov-Rearrangement

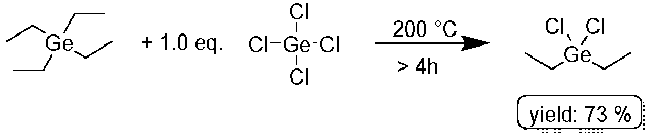

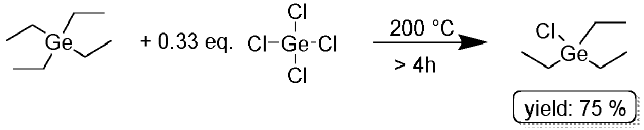

### Triethylchlorogermane:

3.26 g of tetraethylgermane (17.26 mmol) and 1.23 g of tetrachlorogermane (5.75 mmol) and a catalytic amount of aluminum chloride were placed in a screwable vessel and heated for over 4h at 200 °C. After recondensation the product was obtained as a colorless oil in high yield.Yield: 3.35 g (75 %)

Diethyldichlorogermane was synthesized according to the same protocol as triethylchlorogermane, only the equivalents used were adapted.

### PART B1 (Method A): Synthesis of Tetraethyldichlorodigermane

### 1^{st} Step: Phenylation of Dichlorodiethylgermane

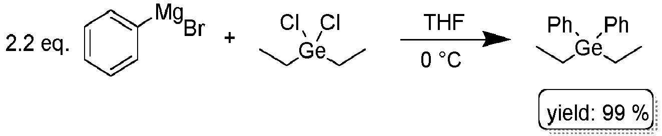

145.5 mL of a 3M Grignard solution (436.39 mmol) were added to a solution of 40 g dichlorodiethylgermane (198.36 mmol) in tetrahydrofuran at 0 °C. After the addition was completed, the reaction mixture was stirred overnight. An aqueous work-up with a NH₄Cl solution followed. The organic layer was separated; the aqueous layer was extracted three times with diethyl ether. The combined organic phases were dried over Na₂SO₄, filtered and the volatile components were removed under vacuum. The product was obtained as a yellow oil in high yield. No further purification was necessary.Yield: 56.0 g (99 %)

### 2^{nd} Step: Chlorination of Diethyldiphenylgermane

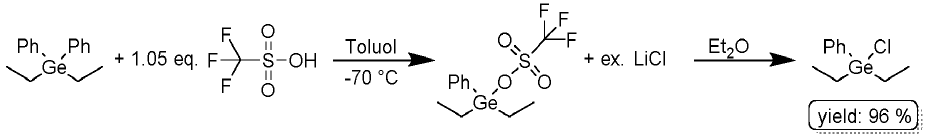

56.0 g diethyldiphenylgermane (196.51 mmol) were dissolved in toluene and cooled to -70 °C. 18.32 mL triflic acid (206.34 mmol) were added rapidly. Once the reaction mixture reached room temperature, 125.00 g LiCI (2.95 mol) and some diethyl ether for dissolving the LiCI were added and the mixture was stirred overnight. The reaction mixture was transferred to a one-neck flask to remove the volatile components under vacuum. The product was washed with *n*-pentane and filtered to remove the salts. The volatile components were then removed again under vacuum. The product was obtained as a yellow oil in high yield. No further purification was necessary. Yield: 46.1 g (96 %)

### 3^{rd} Step: Wurtz Type Coupling of Chlorodiethylphenylgermane

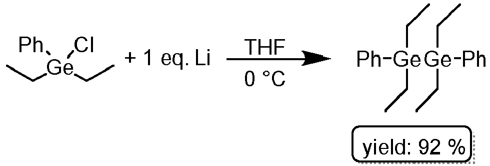

1.31 g lithium (189.47 mmol) were placed in a two-necked flask containing tetrahydrofuran before cooling to 0 °C. 46.1 g chlorodiethylphenylgermane (189.47 mmol) were added and the reaction mixture was stirred at room temperature for several hours. An aqueous work-up with a NH₄Cl solution followed. The organic layer was separated; the aqueous layer was extracted three times with diethyl ether. The combined organic phases were dried over Na₂SO₄, filtered and the volatile components were removed under vacuum. The product was obtained as a yellow oil in high yield. No further purification was necessary. Yield: 36.4 g (92 %)

### 4^{th} Step: Chlorination of Tetraethyldiphenyldigermane

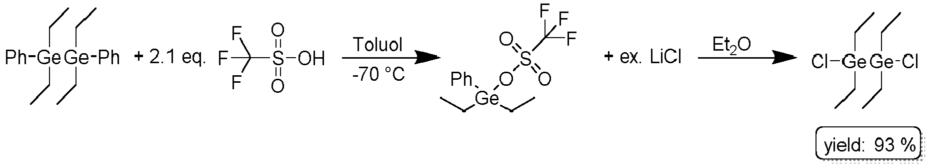

36.4 g tetraethyldiphenyldigermane (87.56 mmol) were dissolved in toluene and cooled to -70 °C. 15.94 mL triflic acid (179.50 mmol) were added rapidly. Once the reaction mixture reached room temperature, 59.70 g LiCI (1.41 mol) and some diethyl ether for dissolving the LiCI were added and the mixture was stirred overnight. The reaction mixture was transferred to a one-neck flask to remove the volatile components under vacuum. The product was washed with *n*-pentane and filtered to remove the salts. The volatile components were then removed again under vacuum. The product was obtained as a yellow oil in high yield. No further purification was necessary. Yield: 26.9 g (93 %)

### PART B2 ( Method B): Synthesis of Hexaethyldichlorodigermane

### 1^{st} Step: Wurtz-Type Coupling to Tetraethyldigermane

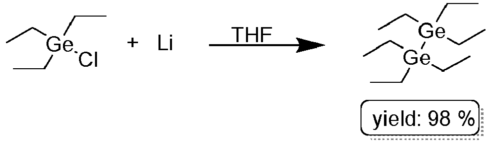

0.12 g lithium (17.16 mmol) were placed in a two-necked flask containing tetrahydrofuran before cooling to 0 °C. 3.35 g triethylchlorogermane (17.16 mmol) were added and the reaction mixture was stirred at room temperature for several hours. An aqueous work-up with a NH₄Cl solution followed. The organic layer was separated; the aqueous layer was extracted three times with diethyl ether. The combined organic phases were dried over Na₂SO₄, filtered and the volatile components were removed under vacuum. The product was obtained as a colorless oil in high yield. No further purification was necessary. Yield: 2.70 g (98 %)

### 2^{nd} Step: Chlorination of Hexaethyldigermane

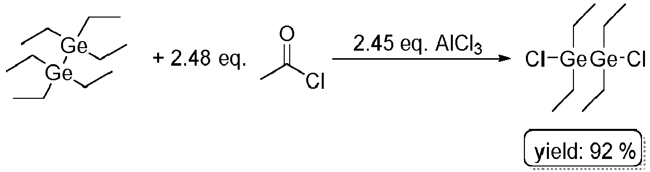

0.30 g acetyl chloride (3.88 mmol) were slowly added to a mixture of 0.51 g aluminum chloride (3.83 mmol) and 0.5 g hexaethyldigermane (1.56 mmol). The flask was immersed in a water bath to prevent raising the reaction temperature too much. After stirring for nearly 2h, the reaction mixture was distilled under reduced pressure. The product was obtained as a colorless oil in high yield. Yield: 0.48 g (92 %)

### PART C: Synthesis of Bisacyldigermanes

### 1^{st} Step: Thioketalization

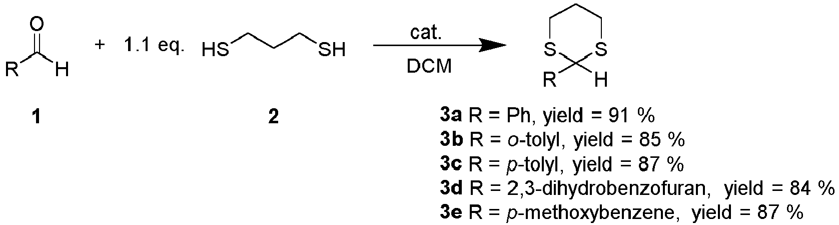

### Synthesis of 3a:

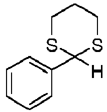

2.49 g of iodine (9.80 mmol) were slowly added to a solution of 10.00 mL benzaldehyde (98.00 mmol) and 10.82 mL of propane-1,3-dithiol (107.80 mmol) in dichloromethane. The resulting mixture was stirred for about 3h. After the addition of sodium thiosulfate to quench the iodine, an aqueous work-up with a 10 % H₂SO₄ solution was carried out and the organic layer was separated; the aqueous layer was extracted three times with dichloromethane. The combined organic phases were dried over Na₂SO₄, filtered and the volatile components were removed under vacuum. The raw product was washed several times with hot *n*-heptane to obtain the pure product as white solid in high yields. Yield: 17.5 g (91 %).

### Synthesis of 3b:

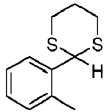

2-(*o*-tolyl)-1,3-dithiane was synthesized according to the same protocol as **3a** with 10.00 mL of *o-*tolualdehyde (86.56 mmol), 9.56 mL propane-1,3-dithiol (95.21 mmol) and 2.20 g iodine (8.66 mmol). Yield: 15.5 g (85 %).

### Synthesis of 3c:

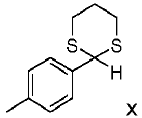

3.08 mL of boron trifluoride diethyl etherate (24.97 mmol) were slowly added to a solution of 10.00 g *p*-tolualdehyde (83.23 mmol) and 9.19 mL of propane-1,3-dithiol (91.55 mmol) in dichloromethane at 0 °C. The resulting mixture was stirred at room temperature for about 3h. After the addition of sodium hydrogen carbonate, an aqueous work-up with a 10 % H₂SO₄ solution was carried out and the organic layer was separated; the aqueous layer was extracted three times with dichloromethane. The combined organic phases were dried over Na₂SO₄, filtered and the volatile components were removed under vacuum. The raw product was recrystallized from acetone to obtain the pure product as white solid in high yields. Yield: 15.3 g (87 %).

### Synthesis of 3d:

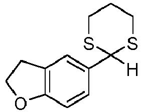

5-(1,3-dithian-2-yl)-2,3-dihydrobenzofuran was synthesized according to the same protocol as **3c** with 20.14 mL of 2,3-dihydrobenzofuran-5-carboxaldehyde (159.96 mmol), 17.66 mL propane-1,3-dithiol (175.96 mmol) and 5.92 mL boron trifluoride diethyl etherate (47.99 mmol). Yield: 32.0 g (84 %).

### Synthesis of 3e:

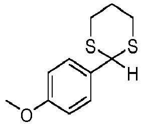

2-(4-methoxyphenyl)-1,3-dithiane was synthesized according to the same protocol as **3c** with 25.00 g *p*-methoxybenzaldehyde (183.62 mmol), 21.86 mL of propane-1,3-dithiol (201.98 mmol) and 6.80 mL of boron trifluoride diethyl etherate (55.09 mmol). Yield: 36.1 g (87 %).

### 2^{nd} Step: Lithiation and Germylation

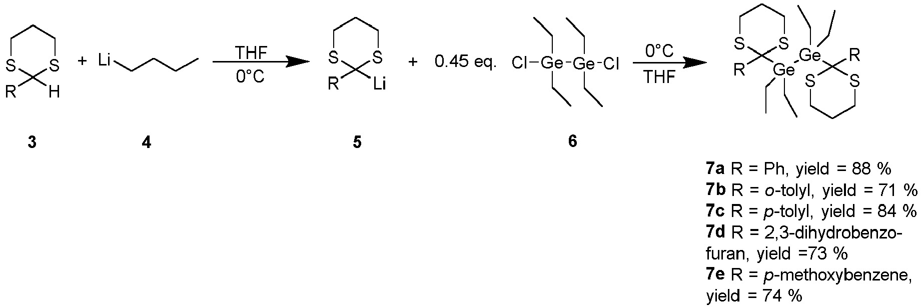

### Synthesis of 7a:

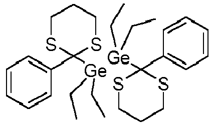

11.10 g of 2-phenyl-1,3-dithiane (56.54 mmol) were dissolved in tetrahydrofuran, cooled to 0 °C and 5.14 mL of 11 M *n*-butyllithium (56.54 mmol) were slowly added. The reaction solution was stirred for 30 minutes at room temperature and then slowly added at 0 °C to a solution of 8.50 g (25.57 mmol) dichlorotetraethyldigermane in tetrahydrofuran. After stirring for about 5 minutes at room temperature an aqueous work-up with saturated NH₄Cl solution was carried out, the organic layer was separated; the aqueous layer was extracted three times with dichloromethane. The combined organic phases were dried over Na₂SO₄, filtered and the volatile components were removed under vacuum. The raw product was recrystallized from acetone at -30 °C, whereby a white solid was obtained in good yields. Yield: 14.7 g (88 %).
mp: 205-207 °C
NMR: ¹H NMR (300 MHz, CDCl₃) δ 7.99 (d, *J* = 7.5 Hz, 4H, Ar-*H*), 7.35 (t, *J* = 7.8 Hz, 4H, Ar-*H*), 7.15 (t, *J* = 7.2 Hz, 2H, Ar-*H*), 2.84 - 2.68 (m, 4H, -S-CH₂-C*H*₂-), 2.33 (d, *J* = 13.8 Hz, 4H, -S-C*H*₂-CH₂-), 2.05 (d, *J* = 13.2 Hz, 2H, -S-C*H*₂-CH₂-), 1.90 - 1.80 (d, 2H, -S-C*H*₂-CH₂-), 1.28 - 1.11 (m, 8H, -Ge-C*H*₂-), 1.00 (t, *J* = 7.6 Hz, 12H, -Ge-CH₂-C*H*₃-).
¹³C NMR (76 MHz, CDCl₃) δ 142.47 (Ar-*C*), 129.19 (Ar-*C*), 128.47 (Ar-*C*), 125.17 (Ar-*C*), 50.13 (-S-*C*-S-), 26.17 (-S-*C*H₂-), 25.42 (-S-CH₂-*C*H₂-), 10.62 (-*C*H₃), 8.83 (-*C*H₂-).
Elem. Anal. Calcd for C₂₈H₄₂Ge₂S₄: C, 51.57 %; H, 6.49 %; S, 19.66 %. Found: C, 51.44 %; H, 6.51 %; S, 19.34 %.

### Synthesis of 7b:

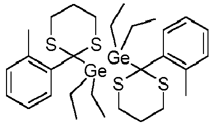

**7b** was synthesized according to the same protocol as **7a** with 8.05 g of 2-(*o*-tolyl)-1,3-dithiane (38.27 mmol), 3.48 mL of 11 M *n*-butyllithium (38.27 mmol) and 5.77 g dichlorotetraethyldigermane (17.36 mmol). Yield: 8.4 g (71 %).
mp: 136-139 °C
NMR: ¹H NMR (300 MHz, CDCl₃) δ 8.26 (d, *J* = 7.5 Hz, 2H, Ar-*H*), 7.22 - 7.07 (m, 6H, Ar-*H*), 2.84 - 2.73 (m, *J* = 22.1, 9.9 Hz, 4H, -S-CH₂-C*H*₂-), 2.71 (s, 6H, Ar-C*H*₃), 2.40 (d, 4H, -S-C*H*₂-CH₂-), 2.04 (d, *J* = 12.9, 6.5 Hz, 2H, -S-C*H*₂-CH₂-), 1.82 (d, *J* = 8.6, 4.8 Hz, 2H, -S-C*H*₂-CH₂-), 1.41 - 1.22 (m, 8H, -Ge-C*H*₂-), 1.02 (t, *J* = 7.7 Hz, 12H, -Ge-CH₂-C*H*₃-).
¹³C NMR (76 MHz, CDCl₃) δ 139.26 (Ar-*C*), 137.87 (Ar-*C*), 133.87 (Ar-*C*), 132.49 (Ar-*C*), 126.11 (Ar-*C*), 125.99 (Ar-*C*), 50.96 (-S-*C*-S-), 27.17 (-S-*C*H₂-), 26.02 (-S-CH₂-*C*H₂-), 25.03 (Ar-*C*H₃), 10.55 (-*C*H₃), 10.28 (-*C*H₂-).
Elem. Anal. Calcd for C₃₀H₄₆Ge₂S₄: C, 52.97 %; H, 6.82 %; S, 18.85 %. Found: C, 53.10 %; H, 6.80 %; S, 18.67 %.

### Synthesis of 7c:

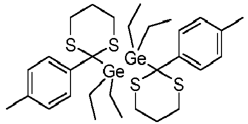

**7c** was synthesized according to the same protocol as **7a** with 7.00 g of 2-(*p*-tolyl)-1,3-dithiane (33.28 mmol), 3.03 mL of 11 M *n*-butyllithium (33.28 mmol) and 5.00 g dichlorotetraethyldigermane (15.04 mmol). Yield: 8.6 g (84 %).
mp: 200-203 °C
NMR: ¹H NMR (300 MHz, CDCl₃) δ 7.85 (d, *J* = 8.1 Hz, 4H, Ar-*H*), 7.15 (d, *J* = 8.1 Hz, 4H, Ar-*H*), 2.84 - 2.70 (m, *J* = 19.2, 7.4 Hz, 4H, -S-CH₂-C*H*₂-), 2.34 (s, 6H, Ar-C*H*₃), 2.29 (d, 4H, -S-C*H*₂-CH₂-), 2.02 (d, *J* = 12.8, 6.4 Hz, 2H, -S-C*H*₂-CH₂-), 1.84 (d, *J* = 10.2, 3.1 Hz, 2H, -S-C*H*₂-CH₂-), 1.25 - 1.13 (m, 8H, -Ge-C*H*₂-), 1.00 (t, *J* = 14.5, 7.0 Hz, 12H, -Ge-CH₂-C*H*₃-).
¹³C NMR (76 MHz, CDCl₃) δ 139.28 (Ar-*C*), 134.67 (Ar-*C*), 129.20 (Ar-*C*), 129.12 (Ar-*C*), 49.95 (-S-*C*-S-), 26.07 (-S-*C*H₂-), 25.47 (-S-CH₂-*C*H₂-), 20.96 (Ar-*C*H₃), 10.67 (-*C*H₃), 8.78 (-*C*H₂-).
Elem. Anal. Calcd for C₃₀H₄₆Ge₂S₄: C, 52.97 %; H, 6.82 %; S, 18.85 %. Found: C, 52.67 %; H, 7.00 %; S, 18.78 %.

### Synthesis of 7d:

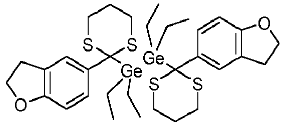

**7d** was synthesized according to the same protocol as **7a** with 8 g of 5-(1,3-dithian-2-yl)-2,3-dihydrobenzofuran (33.56 mmol), 3.05 mL of 11 M *n*-butyllithium (33.56 mmol) and 5.07 g dichlorotetraethyldigermane (15.26 mmol). Yield: 8.2 g (73 %).
mp: 221-224 °C
NMR: ¹H NMR (300 MHz, CDCl₃) δ 7.80 (s, 2H, Ar-*H*), 7.72 (d, *J* = 8.4, 1.7 Hz, 2H, Ar-*H*), 6.75 (d, *J* = 8.5 Hz, 2H, Ar-*H*), 4.58 (t, *J* = 8.6 Hz, 4H, -O-C*H*₂-), 3.21 (t, *J* = 8.5 Hz, 4H, Ar-C*H*₂-), 2.87 - 2.70 (m, *J* = 12.2 Hz, 4H, -S-CH₂-C*H*₂-), 2.31 (d, *J* = 13.9 Hz, 4H, -S-C*H*₂-CH₂-), 2.04 (d, *J* = 13.0 Hz, 2H, -S-C*H*₂-CH₂-), 1.87 (d, *J* = 10.5 Hz, 2H, -S-C*H*₂-CH₂-), 1.23 - 1.09 (m, 8H, -Ge-C*H*₂-), 1.02 (t, *J* = 7.4 Hz, 12H, -Ge-CH₂-C*H*₃-).
¹³C NMR (76 MHz, CDCl₃) δ 157.86 (Ar-*C*), 134.21 (Ar-*C*), 128.98 (Ar-*C*), 127.08 (Ar-*C*), 125.52 (Ar-*C*), 108.72 (Ar-*C*), 71.45 (-O-*C*H₂-), 49.82 (-S-*C*-S), 30.03 (Ar-*C*H₂-), 25.90 (-S-*C*H₂-), 25.37 (-S-CH₂-*C*H₂-), 10.55 (-*C*H₃), 8.64 (-*C*H₂-).
Elem. Anal. Calcd for C₃₂H₄₆Ge₂O₂S₄: C, 52.21 %; H, 6.30 %; S, 17.42 %. Found: C, 51.91 %; H, 6.15 %; S, 17.34 %.

### Synthesis of 7e:

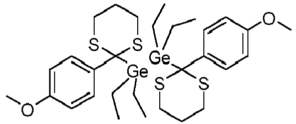

**7e** was synthesized according to the same protocol as **7a** with 7.5 g of 2-(4-methoxyphenyl)-1,3-dithiane (33.13 mmol), 3.01 mL of 11 M *n*-butyllithium (33.13 mmol) and 5.00 g dichlorotetraethyldigermane (15.04 mmol). Yield: 7.9 g (74 %).
mp: 185-188 °C
NMR: ¹H NMR (300 MHz, CDCl₃) δ 7.88 (d, *J* = 8.8 Hz, 4H, Ar-*H*), 6.89 (d, *J* = 8.8 Hz, 4H, Ar-*H*), 3.82 (s, 6H -O-C*H*₃), 2.76 (t, *J* = 12.3 Hz, 4H, -S-CH₂-C*H*₂-), 2.31 (d, *J* = 13.9 Hz, 4H, -S-C*H*₂-CH₂-), 2.03 (d, *J* = 13.1 Hz, 2H, -S-C*H*₂-CH₂-), 1.85 (d, *J* = 13.0 Hz, 2H, -S-C*H*₂-CH₂-), 1.27 - 1.10 (m, 8H, -Ge-C*H*₂-), 1.02 (t, *J* = 7.5 Hz, 12H, -Ge-CH₂-C*H*₃).
¹³C NMR (76 MHz, CDCl₃) δ 157.41 (Ar-*C*), 134.38 (Ar-*C*), 130.35 (Ar-*C*), 113.74 (Ar-*C*), 55.44 (-O-*C*H₃), 49.52 (-S-*C*-S-), 26.00 (-S-*C*H₂-), 25.49 (-S-CH₂-*C*H₂-), 10.67 (-*C*H₃), 8.71 (-*C*H₂-).
Elem. Anal. Calcd for C₃₀H₄₆Ge₂O₂S₄: C, 50.59 %; H, 6.51 %; S, 18.01 %. Found: C, 50.35 %; H, 6.54 %; S, 17.94 %.

### 3^{rd} Step: Dethioketalization

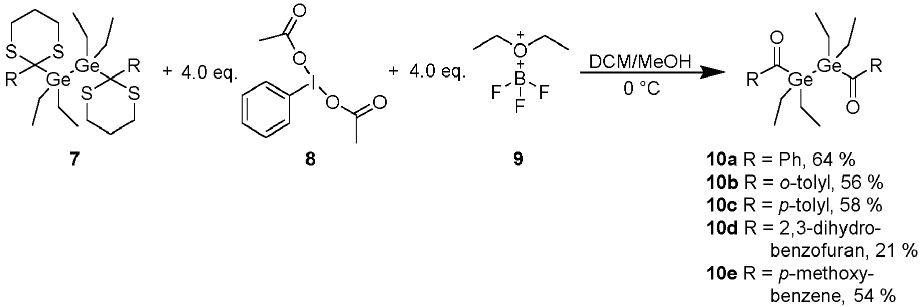

### Synthesis of 10a:

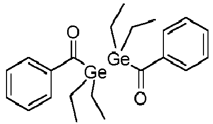

3.36 g of **7a** (5.15 mmol) were dissolved in dichloromethane and dry methanol and cooled to 0 °C. 6.64 g of (diacetoxyiodo)benzene (20.61 mmol) and 2.54 mL of boron trifluoride diethyl etherate (20.61 mmol) were slowly added. After stirring the reaction solution over night at room temperature, n-pentane was added and the mixture was filtered through silica gel to get rid of the BF₃·O(C₂H₅)₂. An aqueous work-up with saturated NH₄Cl solution was carried out, the organic layer was separated; the aqueous layer was extracted three times with dichloromethane. The combined organic phases were dried over Na₂SO₄, filtered and the volatile components were removed under vacuum. The raw product was absorbed in a solvent mixture of *n*-heptane/ethyl acetate 20:1 and filtered through silica gel. After recrystallization from *n*-pentane at -70°C, the product was isolated as a yellow solid in good yields. Yield: 1.56 g (64 %).
mp: 38-40 °C
NMR: ¹H NMR (300 MHz, CDCl₃) δ 7.68 (d, *J* = 7.0 Hz, 4H, Ar-*H*), 7.51 (t, *J* = 7.2 Hz, 2H, Ar-*H*), 7.41 (t, *J* = 7.3 Hz, 4H, Ar-*H*), 1.38 - 1.26 (m, 8H, -Ge-C*H*₂-), 1.08 (t, *J* = 7.7 Hz, 12H, -Ge-CH₂-C*H*₃)
¹³C NMR (76 MHz, CDCl₃) δ 233.70 (*C*=O), 142.00 (Ar-*C*), 133.15 (Ar-*C*), 128.85 (Ar-*C*), 127.65 (Ar-*C*), 10.34 (-*C*H₃), 7.80 (-*C*H₂-)
IR: v(C=O) 1615, 1590, 1576 cm⁻¹
UV-vis: λ [nm], ε[L·mol⁻¹·cm⁻¹] 421,384
Elem. Anal. Calcd for C₂₂H₃₀Ge₂O₂: C, 56.01 %; H, 6.41 %. Found: C, 55.78 %; H, 6.25 %.

### Synthesis of 10b:

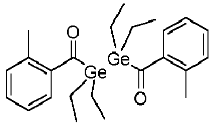

**10b** was synthesized according to the same protocol as **10a** with 1 g of **7b** (1.47 mmol), 0.73 mL of boron trifluoride diethyl etherate (5.88 mmol) and 1.89 g (diacetoxyiodo)benzene (5.88 mmol). Yield: 0.41 g (56 %).
mp: 57-59 °C
NMR: ¹H NMR (300 MHz, CDCl₃) δ 7.55 (dd, *J* = 7.4, 1.2 Hz, 2H, Ar-*H*), 7.36 - 7.17 (m, 6H, Ar-*H*), 2.42 (s, 6H, Ar-C*H*₃), 1.34 - 1.22 (m, 8H, -Ge-C*H*₂-), 1.09 (t, *J* = 7.7 Hz, 12H, -Ge-CH₂-C*H*₃) ¹³C NMR (76 MHz, CDCl₃) δ 237.99 (*C*=O), 141.77 (Ar-*C*), 135.64 (Ar-*C*), 132.16 (Ar-*C*), 131.40 (Ar-*C*), 131.20 (Ar-*C*), 125.71 (Ar-*C*), 20.85 (Ar-*C*H₃), 10.29 (-*C*H₃), 7.90 (-*C*H₂-)
IR: v(C=O) 1615, 1598, 1562 cm⁻¹
UV-vis: λ [nm], ε[L·mol⁻¹·cm⁻¹] 423, 886
Elem. Anal. Calcd for C₂₄H₃₄Ge₂O₂: C, 57.68 %; H, 6.86 %. Found: C, 57.56 %; H, 6.76 %.

### Synthesis of 10c:

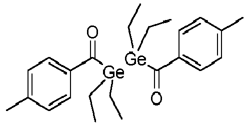

**10c** was synthesized according to the same protocol as **10a** with 2 g of **7c** (2.94 mmol), 1.45 mL of boron trifluoride diethyl etherate (11.76 mmol) and 3.79 g (diacetoxyiodo)benzene (11.76 mmol). Yield: 0.85 g (58 %).
mp: 56-59 °C
NMR: ¹H NMR (300 MHz, CDCl₃) δ 7.53 (d, *J* = 8.1 Hz, 4H, Ar-*H*), 7.13 (d, *J=* 7.9 Hz, 4H, Ar-*H*), 2.31 (s, 6H, Ar-C*H*₃), 1.29 - 1.18 (m, 8H, -Ge-C*H*₂-), 0.99 (t, *J* = 7.7 Hz, 12H, -Ge-CH₂-C*H*₃)
¹³C NMR (76 MHz, CDCl₃) δ 232.70 (*C*=O), 143.96 (Ar-*C*), 139.86 (Ar-*C*), 129.49 (Ar-*C*), 127.88 (Ar-*C*), 21.80 (Ar-*C*H₃), 10.34 (-*C*H₃), 7.77 (-*C*H₂-)
IR: v(C=O) 1618, 1593, 1571 cm⁻¹
UV-vis: λ [nm], ε[L·mol⁻¹·cm⁻¹] 419, 810
Elem. Anal. Calcd for C₂₄H₃₄Ge₂O₂: C, 57.68 %; H, 6.86 %. Found: C, 57.96 %; H, 6.67 %.

### Synthesis of 10d:

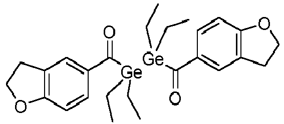

**10d** was synthesized according to the same protocol as **10a** with 2 g of **7d** (2.72 mmol), 1.34 mL of boron trifluoride diethyl etherate (10.87 mmol) and 3.50 g (diacetoxyiodo)benzene (10.87 mmol). Yield: 0.31 g (21 %).
mp: 79-81 °C
NMR: ¹H NMR (300 MHz, CDCl₃) δ 7.52 (d, *J* = 7.7 Hz, 4H, Ar-*H*), 6.71 (d, *J* = 8.7 Hz, 2H, Ar-*H*), 4.61 (t, *J* = 8.7 Hz, 4H, -O-C*H*₂-), 3.15 (t, *J* = 8.7 Hz, 4H, Ar-C*H*₂-), 1.32 - 1.23 (m, 8H, -Ge-C*H*₂-), 1.06 (t, *J* = 7.7 Hz, 12H, -Ge-CH₂-C*H*₃).
¹³C NMR (76 MHz, CDCl₃) δ 229.83 (*C*=O), 164.42 (Ar-*C*), 136.35 (Ar-*C*), 130.77 (Ar-*C*), 127.89 (Ar-C), 124.25 (Ar-*C*), 109.07 (Ar-*C*), 72.30 (-O-*C*H₂-), 28.94 (Ar-*C*H₂-), 10.31 (-*C*H₃), 7.73 (-*C*H₂-).
IR: v(C=O) 1611, 1597, 1564 cm⁻¹
UV-vis: λ [nm], ε[L·mol⁻¹·cm⁻¹] 409, 988
Elem. Anal. Calcd for C₂₆H₃₄Ge₂O₄: C, 56.19 %; H, 6.17 %. Found: C, 56.15 %; H, 6.16 %.

### Synthesis of 10e:

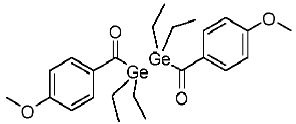

**10e** was synthesized according to the same protocol as **10a** with 3 g of **7d** (4.21 mmol), 2.08 mL of boron trifluoride diethyl etherate (16.85 mmol) and 5.43 g (diacetoxyiodo)benzene (16.85 mmol). Yield: 1.2 g (54 %).
mp: 52-55 °C
NMR: ¹H NMR (300 MHz, CDCl₃) δ 7.68 (d, *J* = 8.7 Hz, 4H, Ar-*H*), 6.87 (d, *J* = 8.7 Hz, 4H, Ar-*H*), 3.86 (s, 6H, -O-C*H*₃), 1.36 - 1.23 (m, 8H, -Ge-C*H*₂-), 1.07 (t, *J* = 7.7 Hz, 12H, -Ge-CH₂-C*H*₃).
¹³C NMR (76 MHz, CDCl₃) δ 230.68 (*C*=O), 163.59 (Ar-*C*), 135.89 (Ar-*C*), 130.10 (Ar-*C*), 113.95 (Ar-*C*), 55.61 (-O-*C*H₃), 10.37 (-C*H*₃), 7.79 (-C*H*₂-).
IR: v(C=O) 1610, 1591, 1566 cm⁻¹.
UV-vis: λ [nm], ε[L·mol⁻¹·cm⁻¹] 411, 961
Elem. Anal. Calcd for C₂₄H₃₄Ge₂O₄: C, 54.21 %; H, 6.44 %. Found: C, 54.23 %; H, 6.57 %.

### PART D: Testing curing efficiency

The curing efficiency of compounds 10a and 10b was tested by blending 1 % of the photoinitiators in a formulation containing 4 g of HEMA (CAS: 868-77-9), 8 g of HEMATMDI (CAS: 72869-86-4) and 7 g of tricyclodecandimethanoldiacrylate (CAS: 42594-17-2). The curing efficiency was quantified by measuring the thickness of a cured layer after irradiating for 8 sec with an AsigaMax 3D printer (405 nm, 11 mW/cm2). The experiments were performed with photoinitiators 10a and 10b and for comparison with two standard photoinitiators, phenyl bis(2,4,6-trimethyl-benzoyl)phosphine oxide (BAPO, CAS: 162881-26-7) and bis(4-methoxy-benzoyl)diethylgermanium (Ivocerin, CAS: 1207515-90-9). The results are shown in Table 1.

**Table 1.**

| Compound | Ivocerin | BAPO | 10a | 10b |
|---|---|---|---|---|
| Thickness of cured layer (mm) | 0.70 | 0.73 | 0.83 | 0.80 |

As can be seen in Table 1, compounds 10a and 10b give the thickest layers (0.83 and 0.80 mm, respectively) as compared to BAPO and Ivocerin (0.70 and 0.73 mm, respectively), indicating high curing efficiency of 10a and 10b at 405 nm.

## Claims

1. Bisacyl digermanium compound according to the general formula (I),
[**R⁰**-][**R⁰**-][**Ar**(C=O)-]Ge-Ge[-(C=O)**Ar**][-**R⁰**][-**R⁰**] (I),
wherein each **R⁰** is idependently an alkyl group, an alkoxy group, an aryl, or an aroyl group,
wherein **Ar** is a substituted or unsubstituted, monocyclic or polycyclic alkyl, aryl, or a heteroaryl group with 6 to 18 ring atoms.

2. Bisacyl digermanium compound according to claim 1,
wherein **Ar** is substituted **m** times by one or more groups **R**, wherein **m** is an integer from 1 to 6 and cannot be greater than the number of substitutable hydrogen atoms in **Ar**,
wherein the one or more groups **R** are independently selected from the list consisting of a halogen, OH, CN, NO₂, CF₃, an N**R¹**₂ group, an OSi**R²**₃ group, a (C=O)**R³** group, a COO**R⁴** group, a C₁ to C₂₀ alkyl group, a C₁ to C₂₀ alkenyl group, a C₁ to C₂₀ alkoxy group and a C₁ to C₂₀ alkenoxy group,
wherein **R¹**, **R²**, and **R³** are independently selected from H and a linear or branched C₁ to C₁₂ alkyl group, and
wherein **R⁴** is selected from H, a linear or branched C₁ to C₁₂ alkyl radical, and Si**R⁵**₃, wherein **R⁵** is a linear or branched C₁ to C₁₀ alkyl group.

3. Bisacyl digermanium compound according to claim 1 or 2,
wherein one or more of the 6 to 18 ring atoms of the group **Ar** are heteroatoms, preferably selected from N, O, S, and combinations thereof.

4. Bisacyl digermanium compound according to claim 2 or 3, wherein the one or more groups **R** are independently selected from C₁ to C₂₀ alkyl, -alkenyl, -alkoxy and -alkenoxy groups, and
are independently linear, branched or cyclic, and/or
are independently interrupted by one or more O atoms, and/or
independently bear a radically polymerizable group or a carbonyl group.

5. Bisacyl digermanium compound according to claim 4, wherein the one or more radically polymerizable groups which can be present as substituents in the one or more groups **R**, are independently selected from vinyl, styryl, acrylate (CH₂=CH-COO-), methacrylate (CH₂=C(CH₃)-COO-), acrylamide (CH₂=CH-CO-N**R⁶**-, with **R⁶**=H or C₁ to C₈ alkyl), and methacrylamide (CH₂=C(CH₃)-CO-NH-), preferably are independently selected from (meth)acrylate, methacrylamide and N-alkylacrylamide.

6. Bisacyl digermanium compound according to one or more of claims 2 to 5, wherein only one group **R** is present, i.e. **m** =1, or wherein more than one groups **R** are present, i.e. **m** >1, which are identical.

7. Bisacyl digermanium compound according to one or more of the preceding claims, wherein the group **Ar** is a substituted or unsubstituted, monocyclic or polycyclic aryl group with 6 to 18 ring atoms, preferably a group selected from the list consisting of phenyl groups, naphthalene groups, anthracene groups, phenanthrene groups, naphthacene groups, anthraquinone groups, and naphthoquinone groups.

8. Bisacyl digermanium compound according to one or more of the preceding claims, wherein the alkyl group **R⁰** is selected from the list consisting of a C₁ to C₂₀ alkyl, a C₁ to C₂₀ alkenyl, C₁ to C₂₀ alkoxy or C₁ to C₂₀ alkenoxy group, preferably the alkyl group **R⁰** is a C₁ to C₁₂ alkyl group, more preferably a C₁ to C₆ alkyl group, and particularly preferred selected from the list consisting of CH₃, C₂H₅, C₃H₇, and C₄H₉.

9. Bisacyl digermanium compound according to one or more of the preceding claims, wherein the compound is selected from the group consisting of:

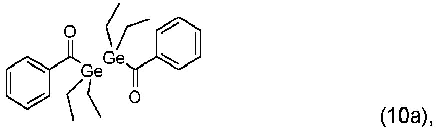

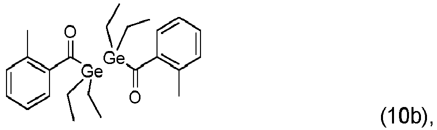

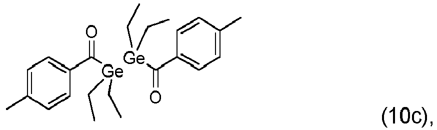

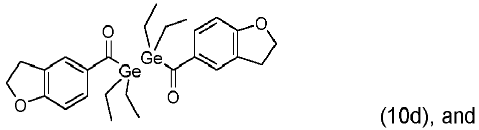

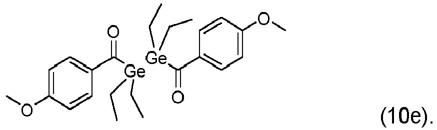

10. Use of a bisacyl digermanium compound according to one or more of the preceding claims as initiator for radical polymerization.

11. Method for preparation of a bisacyl digermanium compound according to the general formula (I), in which a dihalogeno tetraalkyl digermane of formula (II) is reacted with a dithiane compound (III) to form (IV) followed by dethioketalization to form (I),
[**R⁰**₂**X**Ge-]₂ + **Ar**C(-S(CH2)3S-)**M** (II) (III)
→ [**R⁰**₂[**A**rC(-S(CH₂)₃S-)]Ge-]₂ (IV)
→ [**R⁰**₂[**A**r-(C=O)-]Ge-]₂ (I)
wherein each **R⁰** is independently H, an alkyl group, an alkoxy group, an aryl, or an aroyl group,
wherein **Ar** is a substituted or unsubstituted, monocyclic or polycyclic alkyl, aryl, or a heteroaryl group with 6 to 18 ring atoms,
wherein **X** is F, Cl, Br or I, and
wherein **M** is Li, or MgBr.

12. Method according to claim 11,
wherein **Ar** is substituted **m** times by one or more groups **R**, wherein **m** is an integer from 1 to 6 and cannot be greater than the number of substitutable hydrogen atoms in **Ar**,
wherein the one or more groups **R** are independently selected from the list consisting of a halogen, OH, CN, NO₂, CF₃, an N**R¹**₂ group, an OSi**R²**₃ group, a (C=O)**R³** group, a COO**R⁴** group, a C₁ to C₂₀ alkyl group, a C₁ to C₂₀ alkenyl group, a C₁ to C₂₀ alkoxy group and a C₁ to C₂₀ alkenoxy group,
wherein **R¹**, **R²**, and **R³** are independently selected from H and a linear or branched C₁ to C₁₂ alkyl group, and
wherein **R⁴** is selected from H, a linear or branched C₁ to C₁₂ alkyl radical, and Si**R⁵**₃, wherein **R⁵** is a linear or branched C₁ to C₁₀ alkyl group.

13. Method according to claim 11 or 12,
wherein one or more of the 6 to 18 ring atoms of the group **Ar** are heteroatoms, preferably selected from N, O, S, and combinations thereof.

14. Method according to claim 12 or 13, wherein the one or more groups **R** are independently selected from C₁ to C₂₀ alkyl, -alkenyl, -alkoxy and -alkenoxy groups, and
are independently linear, branched or cyclic, and/or
are independently interrupted by one or more O atoms, and/or
independently bear a radically polymerizable group or a carbonyl group.

15. Method according to one or more of claims 11 to 14, wherein the alkyl group **R⁰** is selected from the list consisting of a C₁ to C₂₀ alkyl, a C₁ to C₂₀ alkenyl, C₁ to C₂₀ alkoxy or C₁ to C₂₀ alkenoxy group, preferably the alkyl group **R⁰** is a C₁ to C₁₂ alkyl group, more preferably a C₁ to C₆ alkyl group, and particularly preferred selected from the list consisting of CH₃, C₂H₅, C₃H₇, and C₄H₉.
